# EUROPEAN PATENT APPLICATION

(11) **EP 1 046 779 A1**
(43) Date of publication of application: **25.10.2000**
(21) Application number: 00108388.0
(22) Date of filing: 17.04.2000
(51) Int. Cl.: E21B 17/042, F16L 15/06

(54) **Threaded pipe connection**

(30) Priority: 19.04.1999 US 294889
(71) Applicant: Hydril Company, Houston, Texas 77032 (US)
(72) Inventor: Mallis, David Llewellyn, The Woodlands, Texas 77381 (US); Reynolds, Harris Allen, Jr., Houston, Texas 77055 (US)
(74) Representative: Diehl, Hermann, Dr. Dipl.-Phys.

(57) **Abstract**

A threaded pipe connection includes a pin member (12,16) having an external thread increasing in width in one direction, a box member (10,14) having an internal thread increasing in width in the other direction so that complementry internal and external threads move into engagement upon make-up of the connection and a torque shoulder. The positive stop torque shoulder may be located at the interface of the pin nose/box inner diameter shoulder (22,28) or at the interface of the box face/pin outer diameter (20,24) shoulder on a one-step wedge thread form. On a two-step wedge thread form (26), the positive stop torque shoulder may be located at the interface of the pin nose/box inner diameter shoulder, at the interface of the box face/pin outer diameter shoulder or at the interface between the two steps (26).

## Description

The invention relates to threaded tubular joints usable in oil and gas well drilling and production, such as tubing, casing, line pipe, and drill pipe, commonly known collectively as oilfield tubular goods.

The use of threaded tubular connections for joining flow conduits in an end-to-end relationship to form a continuous flow path for transporting fluid under pressure is well known. Oilfield tubular goods all use threaded connections for connecting adjacent sections of conduit or pipe. Examples of such threaded end connections designed for use on oilfield tubular goods are disclosed in U.S. Patent Nos. 2,239,942; 2,992,019; 3,359,013; RE 30,647; and RE 34,467, all of which are assigned to the assignee of the present invention.

Prior art wedge thread designs offer distinct advantages over other thread designs which include high torsion, high compression, and reliable internal and external pressure sealing capabilities. There are, however, a few issues that require extreme care when designing connection using wedge thread technology. A first issue is designing connections using metal-to-metal sealing interfaces in conjunction with wedge thread technology. A second issue is the inherent wear characteristics encountered during multiple make and breaks associated with wedge thread technology. The primary problem encountered when trying to incorporate a wedge thread with a conical metal-to-metal seal in the prior art is that a very shallow seal angle is required to compensate for the linear variability of the wedge thread torque stop. This invention incorporates a positive stop torque shoulder in conjunction with the wedge thread, which allows for better axial control of the connection at final make up without sacrificing existing advantages of the wedge thread technology. This better controlled axial location of the connection allows for a steeper metal-to-metal seal angle, thus enhancing characteristics of sealability and galling resistance. The second problem encountered using wedge thread technology is determining when the wedge thread begins to wear to a point that the connection is no longer serviceable as a result of repeated make and breaks. By incorporating a secondary positive stop torque shoulder within the primary wedge thread torque stop configuration, connection wear limitations can be better controlled.

It is therefore the object of the present invention to provide a threaded pipe connection which overcomes the drawbacks of the prior art documents. This object is solved by the threaded pipe connection according to independent claim 1 as well as by the method according to independent claim 10. Further advantageous features, aspects and details of the invention are evident from the dependent claims, the description and the drawings. The claims are to be understood as a first non-limiting approach to define the invention in general terms.

The invention relates to wedge thread having a positive stop torque shoulder for connecting male (pin) and female (box) members.

One aspect of the invention is a threaded pipe connection including a pin member having an external thread increasing in width in one direction; a box member having an internal thread increasing in width in the other direction so that complementary internal and external threads move into engagement upon make-up of the connection; and a positive stop torque shoulder. In one embodiment the pin member has an outer diameter shoulder; the box member has a face; and the positive stop torque shoulder is located at an interface of the box face and the pin outer diameter shoulder. In one embodiment, the positive stop torque shoulder is used in conjunction with a metal-to-metal seal. In one embodiment, the external thread of the pin member is formed in a two-step thread configuration; the internal thread of the box member is formed in a two-step thread configuration; and the positive stop torque shoulder is located at an interface between the two steps of the pin and box members.

In another aspect the invention provides a method including rotationally engaging a pin member to a box member. The pin member has an external thread increasing in width in one direction and the box member has an internal thread increasing in width in the other direction. A positive stop torque shoulder is positioned at an interface of the box face and the pin outer diameter shoulder. Complementary internal and external threads move into engagement upon make-up of the connection.

The above-mentioned and other features of the present invention and the invention itself will be better understood by reference to the following detailed description of preferred embodiments of the invention, when considered in conjuctioin with the accompanying drawings, in which:
FIG. 1 is a side view of a one-step wedge thread form in accordance with an embodiment of the invention;
FIG. 2 is a side view of a two-step wedge thread form in accordance with an embodiment of the invention;
FIG. 3 is a side view of a two-step wedge thread form in accordance with an embodiment of the invention;
FIG. 4a shows a torque shoulder in accordance with an embodiment of the invention;
FIG. 4b shows a torque shoulder in accordance with an embodiment of the invention;
FIG. 4c shows a torque shoulder in accordance with an embodiment of the invention;
FIG. 4d shows a torque shoulder in accordance with an embodiment of the invention;
FIG. 5a shows a metal-to-metal seal in accordance with an embodiment of the invention;
FIG. 5b shows a metal-to-metal seal in accordance with an embodiment of the invention;
FIG. 5c shows a metal-to-metal seal in accordance with an embodiment of the invention;
FIG. 5d shows a metal-to-metal seal in accordance with an embodiment of the invention;
FIG. 5e shows a metal-to-metal seal in accordance with an embodiment of the invention;
FIG. 6a shows a combination of a torque shoulder with a metal-to-metal seal in accordance with an embodiment of the invention;
FIG. 6b shows a combination of a torque shoulder with a metal-to-metal seal in accordance with an embodiment of the invention;
FIG. 6c shows a combination of a torque shoulder with a metal-to-metal seal in accordance with an embodiment of the invention;
FIG. 6d shows a combination of a torque shoulder with a metal-to-metal seal in accordance with an embodiment of the invention;
FIG. 6e shows a combination of a torque shoulder with a metal-to-metal seal in accordance with an embodiment of the invention;
FIG. 6f shows a combination of a torque shoulder with a metal-to-metal seal in accordance with an embodiment of the invention.

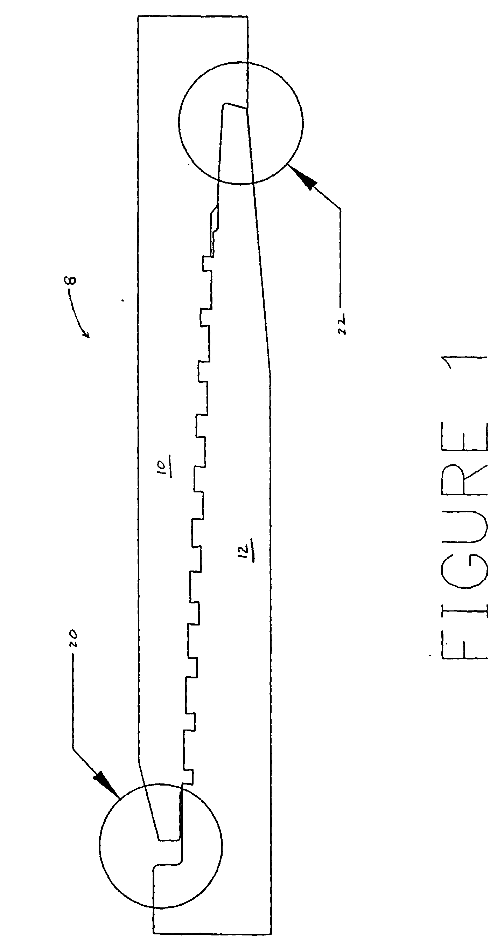

Referring to the drawings wherein like reference characters are used for like parts throughout the several views, FIGS. 1-3 illustrate a cross section of the wedge thread of a pin member and a box member in accordance with embodiments of the invention. As shown in FIG. 1, in one embodiment, the invention is a one-step wedge thread form with a positive stop torque shoulder. The positive stop torque shoulder can be located at the interface of the pin nose/box inner diameter (ID) shoulder, as shown in FIG. 1, or located at the interface of the box face/pin outer diameter (OD) shoulder.

Connection 8 includes a box member 10 and a pin member 12. Box member 10 has a tapered, internal, generally dovetail-shaped thread structure formed thereon and adapted for engaging complementary tapered, external, generally dovetail-shaped thread structure formed on pin member 12 to mechanically secure the box and pin members in a releasable manner.

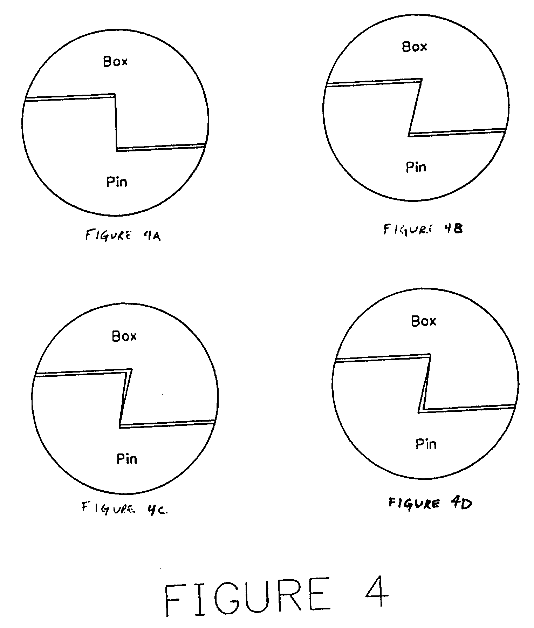

Internal thread of box member 10 has stab flanks, load flanks, roots, and crests. The thread increases in width progressively at a uniform rate in one direction substantially the entire helical length of thread. External thread of pin member 12 has stab flanks, load flanks, roots, and crests. The thread increases in width progressively at a uniform rate in the other direction substantially the entire helical length of thread. The oppositely increasing thread widths and the taper of threads, cause the complementary roots and crests of the respective threads to move into engagement during make-up of the connection. Root and crest engagement is followed by the moving of complementary stab and load flanks into engagement upon make-up of the connection. The moving of complementary flanks, roots and crests into engagement forms sealing surfaces that resist the flow of fluids between the threads. A positive stop torque shoulder is located at either the interface of the box face/pin OD shoulder 20 or the pin nose/box ID shoulder 22. The type of torque shoulder used and the sealing mechanisms associated with the connection will be discussed in detail below with reference to FIGS. 4a-d, 5a-e, and 6a-f.

The positive stop torque shoulder moves into engagement upon make up of the connection. The positve stop torque shoulder engagement may occur simultaneously with the stab and load flanks moving into engagement. Alternatively, the stab and load flanks may move into engagement after root and crest engagement during make-up of the connection and followed by the positive stop torque shoulder engagement upon make-up of the connection.

The pin member 12 or the box member 10 defines the longitudinal axis of the made-up connection. The roots and crests of the box and pin members are flat and parallel to the longitudinal axis of the connection and have sufficient width to prevent any permanent deformation of the threads when the connection is made up.

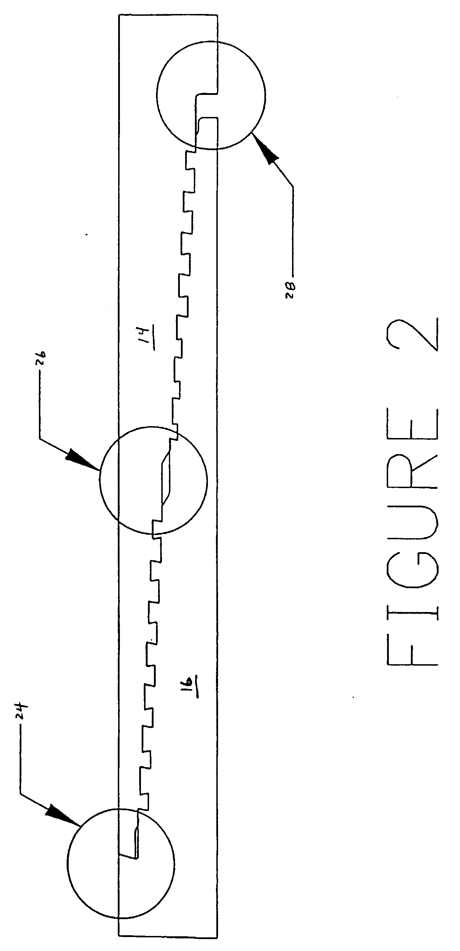

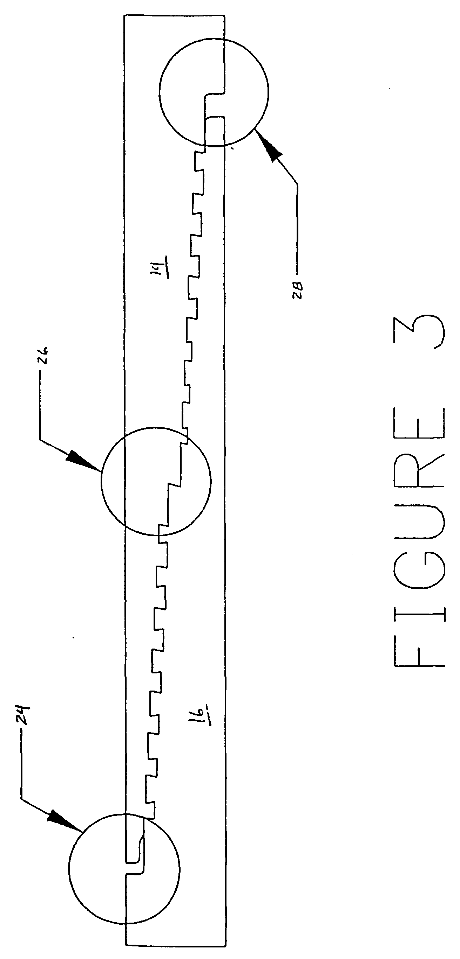

In one embodiment, the invention is a two-step wedge thread form with a positive stop torque shoulder. As shown in FIGS. 2 and 3, the positive stop torque shoulder can be located at the interface of the box face/pin OD shoulder 24, located at the interface between the two thread steps 26, or located at the interface of the pin nose/box ID shoulder 28.

Referring to FIG. 2, connection 8 includes a box member 14 and a pin member 16. Box member 14 has two thread steps each having a tapered, internal, generally dovetail-shaped thread structure formed thereon and adapted for engaging complementary tapered, external, generally dovetail-shaped thread structure formed on the two thread steps of pin member 16 to mechanically secure the box and pin members in a releasable manner.

Internal thread on each step of box member 14 has stab flanks, load flanks, roots, and crests. The thread increases in width progressively at a uniform rate in one direction substantially the entire helical length of thread. External thread on each step of pin member 16 has stab flanks, load flanks, roots, and crests. The thread increases in width progressively at a uniform rate in the other direction substantially the entire helical length of thread. The oppositely increasing thread widths and the taper of threads, cause the complementary roots and crests of the respective threads to move into engagement during make-up of the connection. Root and crest engagement is followed by the moving of complementary stab and load flanks into engagement upon make-up of the connection. The moving of complementary flanks, roots and crests into engagement forms sealing surfaces that resist the flow of fluids between the threads. One or more positive stop torque shoulders may be located at the box face/pin OD 24, the pin/box interface between the two thread steps 26, or the pin nose/box ID 28.

The one or more positive stop torque shoulders move into engagement upon make up of the connection. The positve stop torque shoulder engagement may occur simultaneously with the stab and load flanks moving into engagement. Alternatively, the stab and load flanks may move into engagement after root and crest engagement during make-up of the connection and followed by the positive stop torque shoulder engagement upon make-up of the connection.

The pin member 16 or the box member 14 defines the longitudinal axis of the made-up connection. The roots and crests of the box and pin members are flat and parallel to the longitudinal axis of the connection and have sufficient width to prevent any permanent deformation of the threads when the connection is made up.

Those skilled in the art will appreciate that additional embodiments can be configured with combinations of multiple positive stop torque shoulders as specified above. It is also understood that additional embodiments can be configured with conical metal-to-metal seals or combinations of conical metal-to-metal seals located at the pin nose/box ID interface, the pin/box mid section interface and the box face/pin OD interface in combination with all applicable wedge thread and positive stop torque shoulder options. Exemplary detailed embodiments are described below with reference to FIGS. 4a-d, 5a-e, and 6a-f.

Thread forms in accordance with embodiments of the invention may incorporate torque shoulders, metal-to-metal seals, or combinations thereof. FIGS. 4a-d show some possible torque shoulders configurations in accordance with the invention. FIG. 4A shows a square torque shoulder, or one in which the pin and box members each have a 90° torque shoulder. FIG. 4b shows a angled torque shoulder, or one in which the pin and box members each have a torque shoulder with an angle other than 90° that is matched with the other such that the faces of the torque shoulders are in parallel contact.

FIGS. 4c and 4d show torque shoulder configurations with mismatched angles. Torque shoulders with mismatched angles include either the pin or box member having a torque shoulder with a larger angle than the complementary torque shoulder such that the faces of the torque shoulder are not in parallel contact. FIG. 4c shows a configuration where the pin member has a torque shoulder with a larger angle than the torque shoulder on the box member. FIG. 4d shows a configuration where the box member has a torque shoulder with a larger angle than the torque shoulder on the pin member.

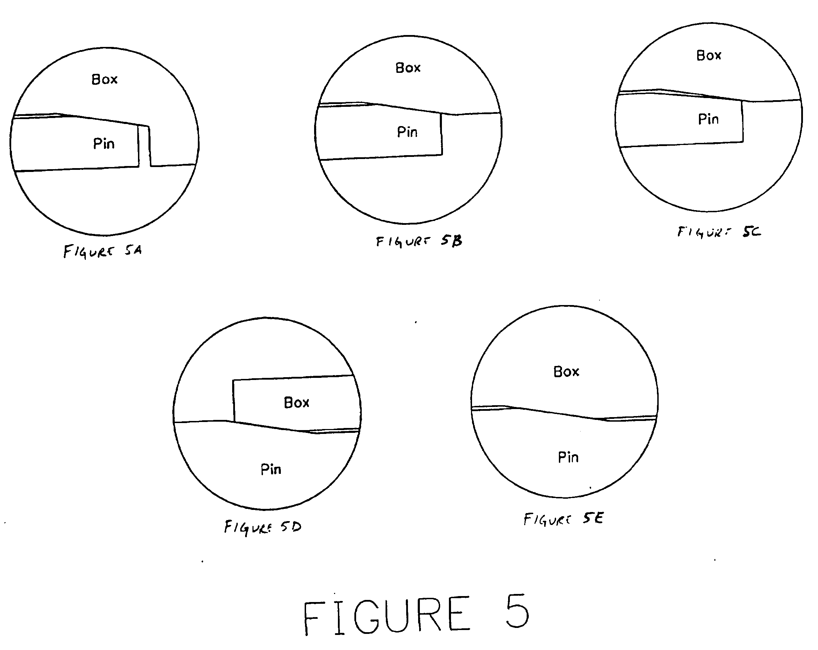

FIGS. 5a-e show metal-to-metal seals in accordance with embodiments of the invention. Metal-to-metal seal can exist at the pin nose/box ID, the box face/pin OD or on a two step thread form at the interface between the two steps. The metal-to-metal seals can be matched or mismatched. Matched metal-to-metal seals have contacting surfaces that are parallel to one another while mismatched metal-to-metal seals have contacting surfaces are not parallel to one another. FIG. 5a shows a matched metal-to-metal seal with an ID shoulder located at the pin nose/box ID. FIG. 5b shows a matched metal-to-metal seal with an open bore at the pin nose/box ID. FIG. 5c shows a mismatched metal-to-metal seal with an open bore at the pin nose/box ID. FIG. 5d shows a matched metal-to-metal seal contact without an OD shoulder at the box face/pin OD. FIG 5e shows a matched metal-to-metal seal on a two step thread form at the interface between the two steps. It will be understood by those skilled in the art that a matched or mismatched metal-to-metal seal may be located at any of the shown locations. It will be further understood that whether an ID shoulder or OD shoulder is included is a matter of design choice.

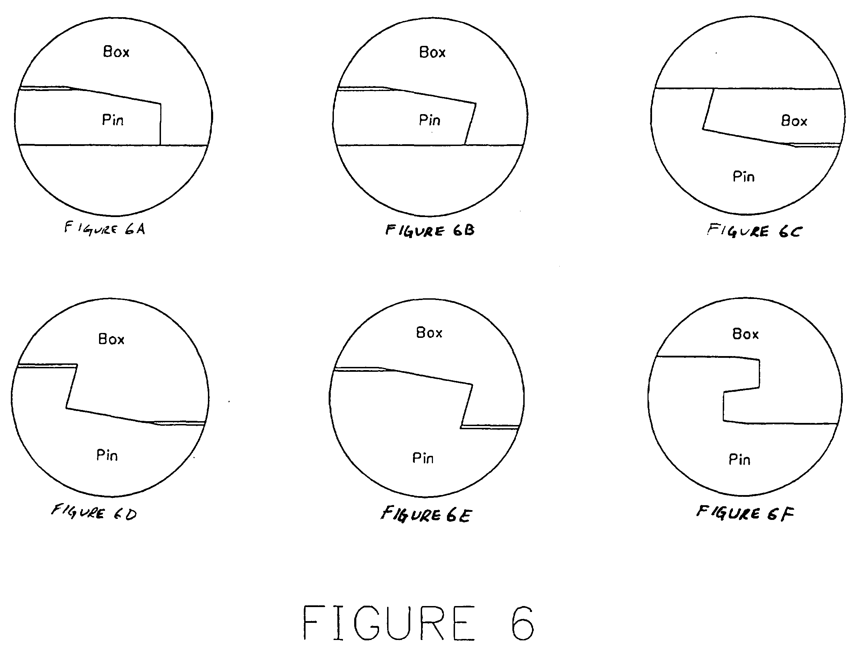

FIGS. 6a-f show metal-to-metal seals implemented in conjunction with torque shoulders in accordance with embodiments of the invention. FIG. 6a shows a matched metal-to-metal seal with an adjacent square torque shoulder at the pin nose/box ID. FIG. 6b shows a matched metal-to-metal seal at the pin nose/box ID with an adjacent reverse angle torque shoulder. FIG. 6c shows a matched metal-to-metal seal at the box face/pin OD with an adjacent reverse angle torque shoulder. FIG. 6d shows a two-step thread form having a matched metal-to-metal seal on the smaller step with an adjacent reverse angle torque shoulder at the interface between the two steps. FIG. 6e a two-step thread form having a matched metal-to-metal seal on the larger step with an adjacent reverse angle torque shoulder at the interface between the two steps. FIG. 6f shows a two-step thread form having a series of matched metal-to-metal seals in an S-shaped configuration with adjacent square and reverse angle torque shoulders located at the interface between the two steps. It will be understood by those skilled in the art that the configurations described above are exemplary and the features shown therein can be combined in different variations without departing from the scope of the invention. Further, it will be understood by those skilled in the art that whether the metal-to-metal seal is matched or mismatched and whether the torque shoulder is square, reverse angled, or otherwise is a matter of design choice.

The torque shoulders disclosed can incorporate various types of sealing mechanisms. A typical metal-to-metal seal, hook shoulder, square shoulder with frustrum (conical or line-contact), and annular shoulder seals. Locked double-shoulder metal-to-metal seals incorporated into the torque shoulder. Elastomeric seals, especially including an elastomeric seal in the groove of a double-shoulder seal configuration. Geometries of the elastomeric seal and groove are designed to insure extrusion of the seal material at make-up. Double-shoulder thermoset resin seal (described below) Certain types of seals, notably the locked double-shoulder metal-to-metal seal located at the torque shoulder, require a high degree of centering action to engage properly and make an effective seal. The progressive engagement feature of the wedge thread (root/crest, then both flanks, in a prescribed order) is an effective means of centering the connection for these types of sealing mechanisms.

In one or more embodiments, for certain applications, a helical relief groove is located at the root/crest interface to insure that pipe-dope entrapment does not plastically deform the connection during power-tight make-up. When made-up power-tight, the locked double-shoulder metal-to-metal seal may, due to the sequence of sealing of metal-to-metal seals, trap pipe dope within the confines of the seal and develop extremely high hydraulic pressures. Experience with a similar configuration in a two-step wedge thread has revealed that some means to relieve the hydraulic pressure is required to prevent deleterious plastic deformation of the connection in such a situation.

A helical relief groove may be placed in the root/crest and extend into the double-shoulder seal to provide an escape path for trapped pipe-dope. Additionally, the sealing sequence at power-tight make-up may be altered so that the seals engage starting from the axial centerline of the connection and working outwards. Sealing in this fashion insures that trapped pipe-dope will migrate radially outward towards the helical pressure relief groove.

A double-shoulder thermoset resin seal can be accomplished with loose-fitting double-shoulder grooves, one of which is filled with low temperature thermoset resin (such as epoxy or phenoloc resins), capped and retained in the groove by a "doughnut" of thin thermoplastic tubing filled with fast-reacting catalyst. When the connection is made-up power-tight, the elements of the double-shoulder seal mesh together axially, rupturing the catalyst "doughnut" and causing the resin to set.

The invention has many distinct advantages over the prior art. A wedge thread design is disclosed that incorporates the basic functions of a prior art wedge thread configured with a positive stop torque shoulder. Typically, this invention is used in conjunction with a conical metal-to-metal seal, but is not limited to it. In one embodiment, in one aspect, the invention offers a positive stop torque shoulder that can work in conjunction with the wedge thread torque stop as a primary torque shoulder. In one embodiment, in one aspect, the invention offers a positive stop torque shoulder that can work in conjunction with the wedge thread torque stop as a secondary torque shoulder. In one embodiment, in one aspect, the invention offers a positive stop torque shoulder that can work independent of the wedge thread as a torque shoulder when the connection is made up.

As used herein, and as conventionally understood where tubular joints are being connected in a vertical position such as when making up a pipe string for lowering into a well bore, the term "load flank" designates the side wall surface of a thread that faces away from the outer end of the respective pin or box member on which the thread is formed and supports the weight of the lower tubular member hanging in the well bore. The term "stab flank" designates that side wall surface of the thread that faces toward the outer end of the respective pin or box member and supports the weight of the upper tubular member during the initial make-up of the joint.

Because many possible embodiments may be made of the invention without departing from the scope thereof, it is to be understood that all matter herein set forth or shown in the accompanying drawings is to be interpreted as illustrative and not in a limiting sense. While the present invention has been described with respect to a limited number of preferred embodiments, those skilled in the art will appreciate numerous modifications and variations therefrom. The appended claims are intended to cover all such modifications and variations which occur to one of ordinary skill in the art.

## Claims

1. A threaded pipe connection (8) comprising:
a pin member (12,16) having an external thread increasing in width in one direction;
a box member (10,14) having an internal thread increasing in width in the other direction so that complementary internal and external threads move into engagement upon make-up of the connection; and
at least one positive stop torque shoulder.

2. The threaded pipe connection of claim 1 wherein:
the pin member (12,16) has an outer diameter shoulder (20,24);
the box member (10,14) has a face; and
the positive stop torque shoulder is located at an interface of the box face and the pin outer diameter shoulder.

3. The threaded pipe connection according to any one of the preceding claims wherein:
the pin member (12,16) has a nose;
the box member (10,14) has an inner diameter shoulder (22,28); and,
the positive stop torque shoulder is located at an interface of the pin nose and the box inner diameter shoulder.

4. The threaded pipe connection according to any one of the preceding claims wherein:
the external thread of the pin member is formed in a two-step thread configuration (26) having an outer diameter shoulder;
the internal thread of the box member is formed in a two-step tread configuration (26) having a face;
the positive stop torque shoulder is located at an interface of the box face and the pin outer diameter shoulder.

5. The threaded pipe connection according to any one of the preceding claims wherein:
the external thread of the pin member is formed in a two-step thread configuration (26) having a nose;
the internal thread of the box member is formed in a two-step thread configuration (26) having an inner diameter shoulder; and
the positive stop torque shoulder is located at an interface of the pin nose and the box inner diameter shoulder.

6. The threaded connection according to any one of the preceding claims wherein:
the external thread of the pin member is formed in a two-step thread configuration (26);
the internal thread of the box member is formed in a two-step thread configuration (26); and
the positive stop torque shoulder is located at an interface between the two steps of the pin and box members.

7. The threaded connection according to any one of the preceding claim wherein the positive stop torque shoulder is used in conjunction with a metal-to-metal seal.

8. The threaded connection according to any one of the preceding claims wherein the internal thread of the box member (10,14) comprises a tapered, internal, generally dovetail-shaped thread having stab flanks, load flanks, roots, and crests, the internal thread increasing in width in one direction;
the external thread of the pin member (12,16) comprises a tapered, external, generally dovetail-shaped thread having stab flanks, load flanks, roots, and crests, the external thread increasing in width in the other direction so that the complementary roots and crests of the internal and external threads move into engagement during make-up of the connection in conjunction with the moving of complementary stab and load flanks into engagement upon make-up of the connection; and
wherein the positive stop torque shoulder moves into engagement simultaneously with the moving of complementary stab and load flanks into engagement upon make-up of the connection.

9. The threaded pipe connection according to any one claims 1 to 7 wherein the internal thread of the box member (10,14) comprises a tapered, internal, generally dovetail-shaped thread having stab flanks, load flanks, roots, and crests, the internal thread increasing in width in one direction;
the external thread of the pin member (12,16) comprises a tapered, external, generally dovetail-shaped thread having stab flanks, load flanks, roots, and crests, the external thread increasing in width in the other direction so that the complementary roots and crests of the internal and external threads move into engagement during make-up of the connection in conjunction with the moving of complementary stab and load flanks into engagement; and
wherein the moving of complementary stab and load flanks into engagement occurs prior to the positive stop torque shoulder moving into engagement upon make-up of the connection.

10. A method comprising:
providing a pin member (12,16) having an external thread increasing in width in one direction;
providing a box member (10,14) having an internal thread increasing in width in the other direction so that the complementary internal and external threads move into engagement upon make-up of the connection;
providing at least one positive stop torque shoulder; and
rotationally engaging the pin member (12,16) and the box member (10,14).

11. The method of claim 10 further comprising:
providing the pin member (12,16) an outer diameter shoulder;
providing the box member (10,14) a face; and
disposing the positive stop torque shoulder at an interface of the box face and the pin outer diameter shoulder.

12. The method according to any one of claims 10 or 11 further comprising :
providing the pin member (12,16) a nose;
providing the box member (10,14) an inner diameter shoulder; and
disposing the positive stop torque shoulder at an interface of the pin nose and the box inner diameter shoulder.

13. The method according to any one of claims 10 to 12 further comprising:
providing the external thread of the pin member (12,16) in a two-step configuration having an outer diameter shoulder;
providing the internal thread of the box member (10,14) in a two-step configuration having a face; and
disposing the positive stop torque shoulder at an interface of the box face and the pin outer diameter shoulder.

14. The method according to any one of claims 10 to 13 further comprising:
providing the external thread of the pin member (12,16) in a two-step configuration having a nose;
providing the internal thread of the box member (10,14) in a two-step configuration having an inner diameter shoulder;and
disposing the positive stop torque shoulder at an interface of the pin nose and the box inner diameter shoulder.

15. The method according to any one of claims 10 to 14 further comprising:
providing the internal thread of the pin member (12,16) in a two-step configuration;
providing the external thread of the box member (10,14) in a two-step configuration; and
disposing the positive stop torque shoulder at an interface between the two steps of the pin and box members.

16. The method according to any one of claims 10 to 15 wherein the positive stop torque shoulder is used in conjunction with a metal-to-metal seal.

17. The method according to any one of claims 10 to 16 wherein the internal thread of the box member comprises a tapered, internal, generally dovetail-shaped thread having stab flanks, load flanks, roots, and crests, the internal thread increasing in width in one direction; and the external thread of the pin member comprises a tapered, external, generally dovetail-shaped thread having stab flanks, load flanks, roots and crests, the external thread increasing in width in the other direction so that complementary internal and external threads move into engagement upon make-up of the connection; the method further comprising:
dimensioning the external thread of the pin member and the internal thread of the box member such that
the roots and crests of the internal and external threads move into engagement during make-up of the connection in conjunction with the moving of complementary stab and load flanks into engagement upon make-up of the connection; and
the moving of complementary stab and load flanks into engagement upon make-up of the connection occurs simultaneously with the positive stop torque shoulder moving into engagement.

18. The method according to any one of claims 10 to 16 wherein the internal thread of the box member comprises a tapered, internal, generally dovetail-shaped thread having stab flanks, load flanks, roots, and crests, the internal thread increasing in width in one direction; and the external thread of the pin member comprises a tapered, external, generally dovetail-shaped thread having stab flanks, load flanks, roots, and crests, the external thread increasing in width in the other direction so that complementary internal and external threads move into engagement during make-up of the connection; the method further comprising:
dimensioning the external thread of the pin member and the internal thread of the box member such that
the roots and crests of the internal and external threads move into engagement upon make-up of the connection in conjunction with the moving of complementary stab and load flanks into engagement; and
the moving of complementary stab and load flanks into engagement occurs prior to the positive stop torque shoulder moving into engagement upon make-up of the connection.
